# EUROPEAN PATENT APPLICATION

(11) **EP 4 666 929 A1**
(43) Date of publication of application: **24.12.2025**
(21) Application number: 24775250.4
(22) Date of filing: 15.02.2024
(51) Int. Cl.: A47L 9/30, A47L 9/02, G02B 6/00, F21V 33/00, F21Y 115/10, F21Y 103/10, F21W 131/30

(54) **SUCTION HEAD FOR VACUUM CLEANER**

(30) Priority: 23.03.2023 KR 20230037761; 02.05.2023 KR 20230057342
(71) Applicant: Samsung Electronics Co., Ltd., Suwon-si, Gyeonggi-do 16677 (KR)
(72) Inventor: LEE, Hansaem, Suwon-si, Gyeonggi-do 16677 (KR); KANG, Hun, Suwon-si, Gyeonggi-do 16677 (KR); KWON, Kihwan, Suwon-si, Gyeonggi-do 16677 (KR); KIM, Dongjun, Suwon-si, Gyeonggi-do 16677 (KR); LEE, Keunbum, Suwon-si, Gyeonggi-do 16677 (KR); LEE, Dongwoo, Suwon-si, Gyeonggi-do 16677 (KR); CHOI, Jiwon, Suwon-si, Gyeonggi-do 16677 (KR)
(74) Representative: Walaski, Jan Filip
(86) International application number: PCT/KR2024/095182
(87) International publication number: WO 2024/196204

(57) **Abstract**

A suction head 1 for a vacuum cleaner includes: a housing 10 including a suction port; a light source assembly 30 to be disposed inside the housing 10 and configured to emit light; and a light guide 50 to be disposed on a front side of the housing 10 and configured to guide light emitted from the light source assembly 30 to be emitted toward the front side of the housing 10. A serration portion 52 is formed on one surface of the light guide 50 facing the light source assembly 30.

## Description

### [Technical Field]

The disclosure relates to a vacuum cleaner, and more particularly, to a suction head for a vacuum cleaner.

### [Background Art]

A vacuum cleaner is a device configured to suck up dust using suction power.

The vacuum cleaner may include a main body and a suction head. The main body and the suction head may be connected by an extension pipe.

The main body may include a suction power generating device configured to generate suction power and a dust collecting device configured to separate and store dust.

The suction head may be configured to move on the surface to be cleaned and to suck up dust. A suction port may be provided on the lower surface of the suction head through which dust is sucked up. The suction port and the suction power generating device may be in communication with each other. Therefore, when the suction power generating device operates, dust on the surface to be cleaned may be sucked up into the suction port, and may be separated and collected by the dust collecting device.

The suction head may include a lighting device for illuminating the surface to be cleaned. When the lighting device is operated, the dark surface to be cleaned in front of the suction head may be illuminated.

### [Disclosure of Invention]

### [Technical Problem]

An aspect of the disclosure is to provide a suction head for a vacuum cleaner having a lighting device with improved diffusion and uniformity.

### [Technical Solution]

A suction head 1 for a vacuum cleaner according to one or more embodiments of the disclosure may include: a housing 10 including a suction port; a light source assembly 30, to be disposed inside the housing 10, configured to emit light; and a light guide 50, to be disposed on a front side of the housing 10, configured to guide light emitted from the light source assembly 30 to be emitted toward the front side of the housing 10. A serration portion 52 may be formed on one surface of the light guide 50 facing the light source assembly 30.

The light source assembly 30 may include; a printed circuit board 31; and a plurality of light sources 33 disposed on the printed circuit board 31.

The light guide 50 may include a plurality of serration portions 52 corresponding to the plurality of light sources 33.

The light guide 50 may include a plurality of grooves 53 formed between the plurality of serration portions 52.

The plurality of grooves 53 may be formed in a V shape.

The serration portions 52 may be formed in a plurality of protrusions 521 protruding from the one surface of the light guide 50.

The plurality of protrusions 521 may be formed as a plurality of triangular prisms.

The plurality of triangular prisms may be formed so that two adjacent triangular prisms are in contact with each other.

The light guide 50 may include: a light-input surface 51 on which light emitted from the light source assembly 30 is incident and the serration portion 52 is formed; a light-output surface 55 from which the light incident on the light-input surface 51 is emitted; a lower surface connecting the light-input surface 51 and the light-output surface 55; and an upper surface facing the lower surface and connecting the light-input surface 51 and the light-output surface 55. The light-output surface 55 may be formed as a diffuse reflection surface enabled to diffuse and to reflect the emitted light.

The light guide 50 may be formed such that the light-input surface 51 and the light-output surface 55 form a right angle.

The lower surface of the light guide 50 may be formed as a diffuse reflection surface enabled to diffuse and to reflect incident light.

According to another aspect of the disclosure, a suction head for a vacuum cleaner may include: a housing 10 including a suction port; a light source assembly 30, to be disposed inside the housing 10, including a plurality of light sources 33 configured to emit light; and a light guide 50, to be disposed on a front side of the housing 10, configured to guide light emitted from the light source assembly 30 to be emitted toward the front side of the housing 10. The light guide 50 may include a plurality of serration portions 52 formed on a light-input surface 51 facing the plurality of light sources 33 of the light source assembly 30; and a plurality of V-shaped grooves 53 formed between the plurality of serration portions 52.

The plurality of serration portions 52 may include a plurality of triangular prisms.

The light guide 50 may include a light-output surface 55 through which light is emitted. The light-output surface 55 may be formed as a diffuse reflection surface enabled to diffuse and to reflect the emitted light.

According to another aspect of the disclosure, a vacuum cleaner may include: a suction head including any one of the features described above, and a dust collecting device 120 connected to the suction head and configured to collect dust sucked through the suction head.

### [Brief Description of Drawings]

These and/or other aspects, features, and advantages of certain embodiments of the disclosure will be more apparent from the following description taken in conjunction with the accompanying drawings, in which:
FIG. 1 is a perspective view illustrating a suction head 1 for a vacuum cleaner according to one or more embodiments of the disclosure.
FIG. 2 is a cross-sectional view illustrating a suction head 1 for a vacuum cleaner according to one or more embodiments of the disclosure.
FIG. 3 is a perspective view illustrating a state in which an upper housing 12 is separated from a suction head 1 for a vacuum cleaner according to one or more embodiments of the disclosure.
FIG. 4 is a perspective view illustrating a state in which a lighting device 20 is separated from the suction head 1 for the vacuum cleaner of FIG. 3.
FIG. 5 is an exploded perspective view illustrating a lighting device 20 of a suction head 1 for a vacuum cleaner according to one or more embodiments of the disclosure.
FIG. 6 is a cross-sectional view illustrating a lighting device 20 of a suction head 1 for a vacuum cleaner according to one or more embodiments of the disclosure.
FIG. 7 is an enlarged partial cross-sectional view illustrating part A of the lighting device 20 of FIG. 6.
FIG. 8 is a perspective view illustrating a light guide 50 of a suction head 1 for a vacuum cleaner according to one or more embodiments of the disclosure.
FIG. 9 is a partial cross-sectional view illustrating a light guide 50 of a suction head 1 for a vacuum cleaner according to one or more embodiments of the disclosure.
FIG. 10 is a perspective view illustrating a serration portion 52 of a light guide 50 of a suction head 1 for a vacuum cleaner according to one or more embodiments of the disclosure.
FIG. 11 is a perspective view illustrating a serration portion 52 of a light guide 50 of a suction head 1 for a vacuum cleaner according to one or more embodiments of the disclosure.
FIG. 12 is a partial cross-sectional view illustrating a light guide 50 of a suction head 1 for a vacuum cleaner according to one or more embodiments of the disclosure.
FIG. 13 is a partial cross-sectional view illustrating a light guide 50 of a suction head 1 for a vacuum cleaner according to one or more embodiments of the disclosure.
FIG. 14 is a partial cross-sectional view illustrating a light guide 50 of a suction head 1 for a vacuum cleaner according to one or more embodiments of the disclosure.
FIG. 15 is a perspective view illustrating a comparison light guide 50' compared to a light guide 50 of a suction head 1 for a vacuum cleaner according to one or more embodiments of the disclosure.
FIG. 16 is a graph illustrating the brightness distribution of a bottom surface of a suction head 1 for a vacuum cleaner using the comparison light guide 50' of FIG. 15.
FIG. 17 is a graph illustrating the brightness distribution of a bottom surface of a suction head 1 for a vacuum cleaner according to one or more embodiments of the disclosure.
FIG. 18 is a graph illustrating the brightness distribution of a light-output surface 55 of the comparison light guide 50' of a suction head 1 for a vacuum cleaner using the comparison light guide 50' of FIG. 15.
FIG. 19 is a graph illustrating the brightness distribution of a light-output surface 55 of a light guide 50 of a suction head 1 for a vacuum cleaner according to one or more embodiments of the disclosure.
FIG. 20 is a perspective view illustrating a vacuum cleaner according to one or more embodiments of the disclosure.

### [Best Mode for Carrying out the Invention]

Various embodiments of this document and terms used herein are not intended to limit the technical features described in this document to specific embodiments, but should be understood to include various modifications, equivalents, or alternatives of the embodiments.

In connection with the description of the drawings, similar reference numbers may be used for similar or related components.

The singular form of a noun corresponding to an item may include one or more of the above item, unless the relevant context clearly indicates otherwise.

In this document, each of phrases such as "A or B," "at least one of A and B," "at least one of A or B," "A, B, or C," "at least one of A, B, and C," "at least one of A, B, C" may include any one of the items listed together with the corresponding phrase, or any possible combination thereof.

The term "and/or" includes any element of a plurality of related described elements or a combination of a plurality of related described elements.

Terms such as "first," "second," "primary," or "secondary" may be used simply to distinguish one component from other components, and do not limit the corresponding components in other respects (e.g., importance or order).

When a component (e.g., a first component) is said to be "coupled" or "connected" to another component (e.g., a second component), with or without the terms "functionally" or "communicatively," it means that the component can be connected to the other component directly (e.g., wired), wirelessly, or through a third component.

Terms such as "include" or "have" are intended to designate the presence of features, numbers, steps, operations, components, parts, or combinations thereof described in the embodiment, but do not preclude the presence or addition of one or more other features, numbers, steps, operations, components, parts, or combination thereof.

When a component is said to be "connected," "coupled," "supported," or "in contact" with another component, this means not only cases where the components are directly connected, coupled, supported, or contacted, but also cases where the components are indirectly connected, coupled, supported, or contacted through a third component.

When a component is said to be located "on" other component, this includes not only cases where the component is in contact with the other component, but also cases where another component exits between the two components.

Hereinafter, a suction head 1 for a vacuum cleaner according to one or more embodiments of the disclosure will be described in detail with reference to the attached drawings.

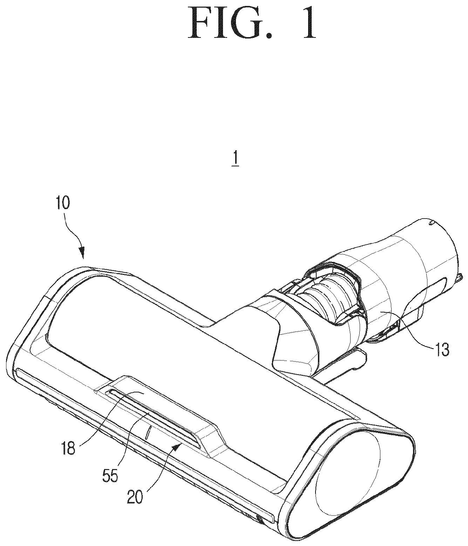

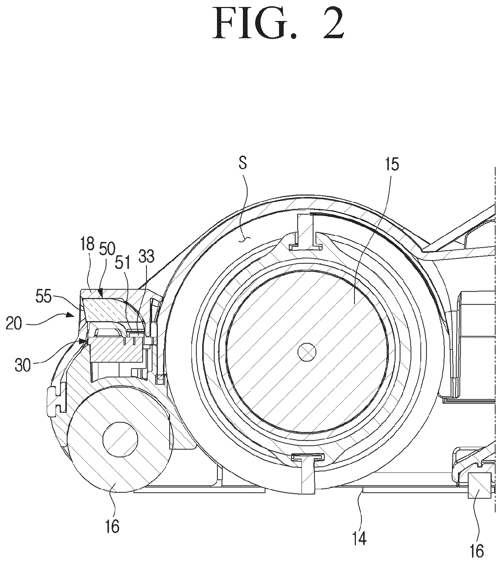

FIG. 1 is a perspective view illustrating a suction head 1 for a vacuum cleaner according to one or more embodiments of the disclosure. FIG. 2 is a cross-sectional view illustrating a suction head 1 for a vacuum cleaner according to one or more embodiments of the disclosure.

Referring to FIGS. 1 and 2, a suction head 1 for a vacuum cleaner according to one or more embodiments of the disclosure may include a housing 10 and a lighting device 20.

The housing 10 may form the exterior of the suction head 1. A connecting pipe 13 may be provided on the rear side of the housing 10. The connecting pipe 13 may be connected to a main body 110 of a vacuum cleaner 100.

A suction port 14 may be provided on the lower surface of the housing 10. Dust on a surface to be cleaned may be sucked into the suction port 14.

A suction space S may be provided inside the housing 10. The suction space S of the housing 10 may communicate the suction port 14 and the connecting pipe 13. Accordingly, dust on the surface to be cleaned may be drawn into the suction space S through the suction port 14 and then move to the main body 110 of the vacuum cleaner 100 through the connecting pipe 13.

A brush 15 may be rotatably disposed inside the housing 10, i.e., in the suction space S. The brush 15 may be disposed so that a portion of the brush 15 is exposed through the suction port 14 of the housing 10. The portion of the brush 15 may come into contact with the surface to be cleaned through the suction port 14. Therefore, when the brush 15 rotates, dust on the surface to be cleaned may be smoothly introduced into the suction space S of the housing 10.

The brush 15 may be formed in a cylindrical shape. Both ends of the brush 15 may be rotatably supported by the housing 10. The brush 15 may be configured to rotate by a motor. Therefore, when the motor is operated, the brush 15 may rotate. The motor of the brush 15 may be supplied with power from the main body 110 of the vacuum cleaner 100.

In this embodiment, the brush 15 is disposed inside the housing 10, but the disclosure is not limited thereto. As another example, the brush 15 may not disposed inside the housing 10.

A plurality of rollers 16 may be disposed on the lower surface of the housing 10. The plurality of rollers 16 may be disposed in front and rear of the suction port 14. The plurality of rollers 16 may allow the suction head 1 to move smoothly on the surface to be cleaned.

The lighting device 20 may be disposed on the front side of the housing 10. The lighting device 20 may be disposed in front of the suction space S. The lighting device 20 may be configured to emit light to illuminate the front of the suction head 1.

The lighting device 20 may include a light source assembly 30 and a light guide 50.

The light source assembly 30 may be configured to emit light and disposed inside the housing 10. The light source assembly 30 may be disposed on the front side of the housing 10. The light source assembly 30 may be disposed so that a portion of the light source assembly 30 from which light is emitted is located in front of the suction space S and at the front side of the housing 10.

The light source assembly 30 may include at least one light source 33. The at least one light source 33 may be implemented as a light emitting diode LED.

The light guide 50 may be configured to guide light emitted from the light source assembly 30. The light guide 50 may be configured to guide light emitted from the light source assembly 30 to the front of the housing 10.

The light guide 50 may be disposed on the front side of the housing 10. The light guide 50 may be disposed above the light source assembly 30 on the front side of the housing 10. Therefore, light emitted from the light source assembly 30 may be guided to the front of the housing 10 by the light guide 50.

The light guide 50 may include a light-input surface 51 and a light-output surface 55. The light-input surface 51 may be formed to face the light source assembly 30. The light-output surface 55 may be formed to be exposed to the front of the housing 10. Therefore, the light-output surface 55 of the light guide 50 may be viewed from the front of the suction head 1.

The light emitted from the light source assembly 30 may be incident on the light-input surface 51 of the light guide 50, move along the light guide 50, and then be emitted to the front of the suction head 1 through the light-output surface 55.

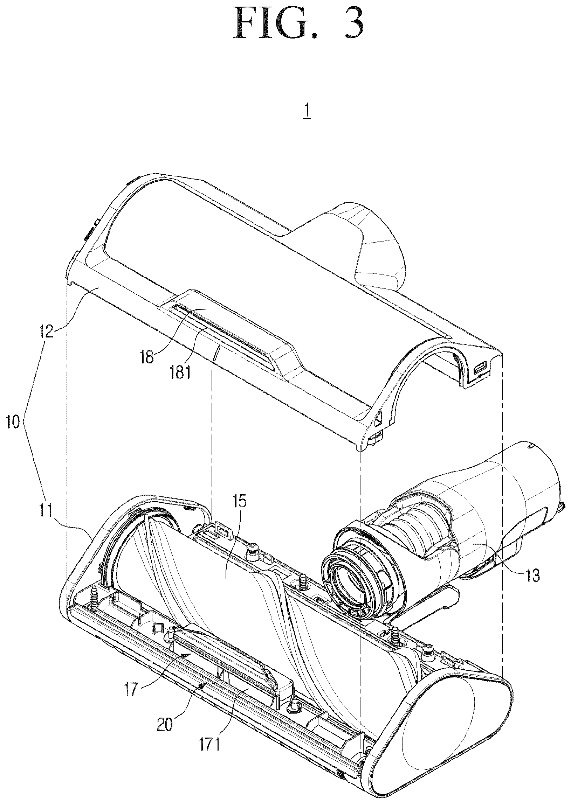

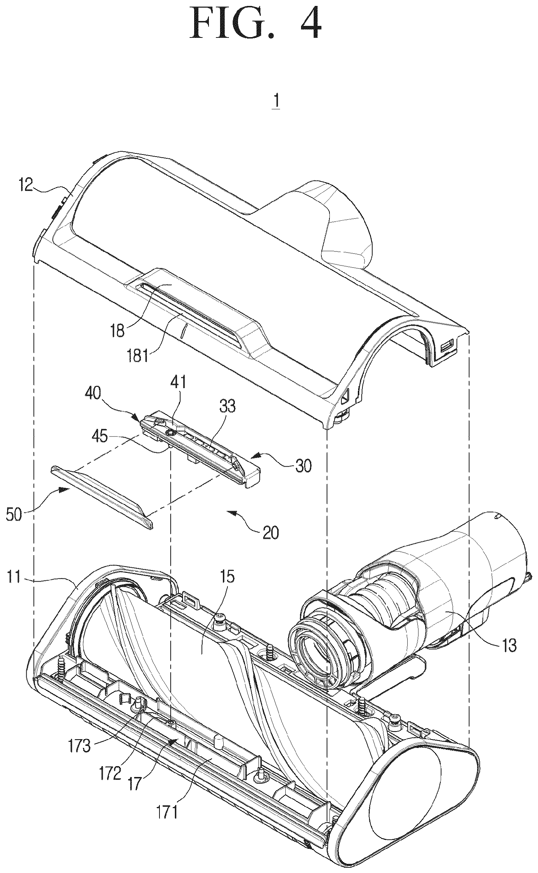

FIG. 3 is a perspective view illustrating a state in which an upper housing 12 is separated from a suction head 1 for a vacuum cleaner according to one or more embodiments of the disclosure. FIG. 4 is a perspective view illustrating a state in which a lighting device 20 is separated from the suction head 1 for the vacuum cleaner of FIG. 3.

Referring to FIGS. 3 and 4, the housing 10 of the suction head 1 for a vacuum cleaner according to one or more embodiments of the disclosure may include a lower housing 11 and an upper housing 12.

The lower housing 11 may include a connecting pipe 13. The connecting pipe 13 may be connected to the main body 110 of the vacuum cleaner 100.

The suction port 14 may be provided on the lower surface of the lower housing 11. The brush 15 may be rotatably disposed above the suction port 14. Therefore, the brush 15 may rotate relative to the lower housing 11.

The lighting device 20 may be disposed on the front portion of the lower housing 11. A mounting portion 17 for installing the lighting device 20 may be provided on the front portion of the lower housing 11.

The mounting portion 17 may be formed to fix the light source assembly 30 of the lighting device 20. FIG. 3 shows a state in which the lighting device 20 is disposed in the mounting portion 17 of the lower housing 11, and FIG. 4 shows a state in which the lighting device 20 is separated from the lower housing 11.

The mounting portion 17 may be formed in a shape corresponding to the light source assembly 30. In the case of this embodiment, the mounting portion 17 may be formed as a partition wall 171 protruding from the bottom of the lower housing 11.

The light source assembly 30 may be formed in an approximately rectangular parallelepiped shape. The mounting portion 17 may be formed to accommodate the light source assembly 30 having the rectangular parallelepiped shape. Therefore, the partition wall 171 forming the mounting portion 17 may be arranged in a rectangular shape.

The partition wall 171 of the mounting portion 17 may be formed to surround three sides of the light source assembly 30. The mounting portion 17 may include a fixing boss 172. A fixing hole 173 may be formed at the center of the fixing boss 172.

The light source assembly 30 may include a fixing protrusion 45. The fixing protrusion 45 of the light source assembly 30 and the fixing boss 172 of the mounting portion 17 may be provided at positions corresponding to each other. Therefore, when the fixing protrusion 45 of the light source assembly 30 is inserted into the fixing boss 172 of the mounting portion 17, the light source assembly 30 may be fixed to the mounting portion 17 of the lower housing 11.

The upper housing 12 may be formed to cover the lower housing 11. When the upper housing 12 is coupled to the lower housing 11, the housing 10 may be formed.

When the upper housing 12 is coupled to the lower housing 11, the suction space S that communicates the suction port 14 with the connecting pipe 13 may be formed.

A lighting cover 18 covering the upper part of the lighting device 20 may be provided on the front side of the lower housing 11. The lighting cover 18 may be formed in a shape corresponding to the upper part of the lighting device 20. A light window 181 through which light is emitted may be formed on the front side of the lighting cover 18.

The light window 181 may be formed in a shape corresponding to the light-output surface 55 of the light guide 50 of the lighting device 20. When the upper housing 12 is connected to the lower housing 11, the light-output surface 55 of the light guide 50 may be exposed through the light window 181. The light-output surface 55 of the light guide 50 may be supported by the edge of the light window 181.

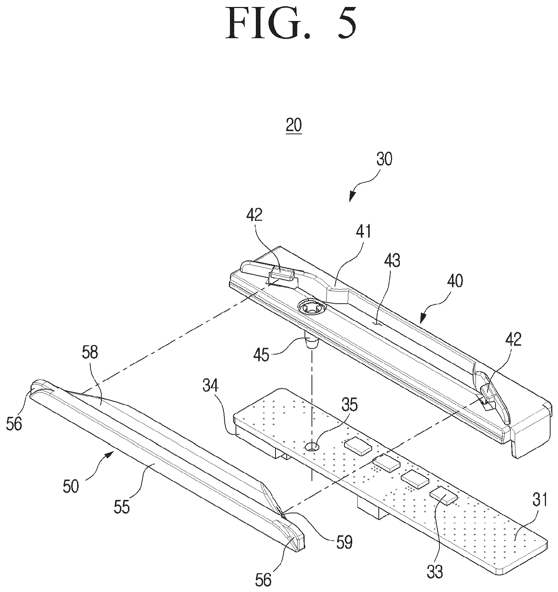

Hereinafter, the lighting device 20 used in the suction head 1 for a vacuum cleaner according to one or more embodiments of the disclosure will be described in detail with reference to FIGS. 5 to 8.

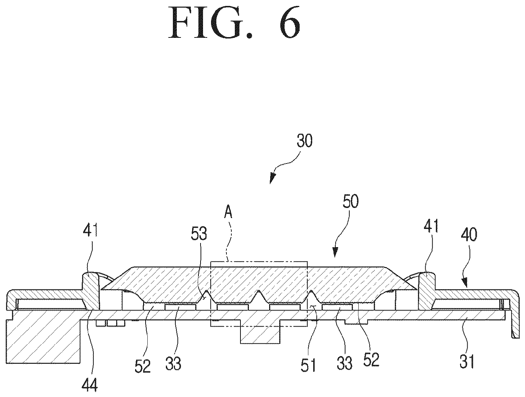

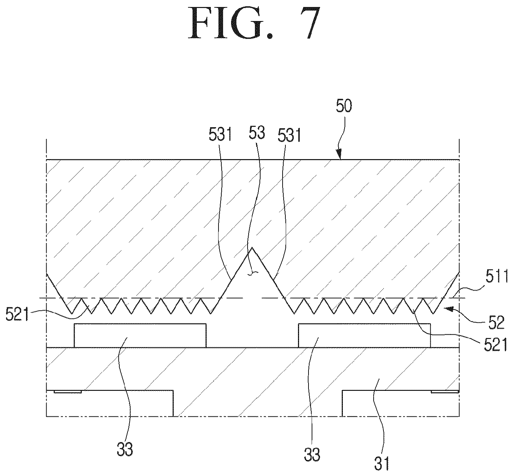

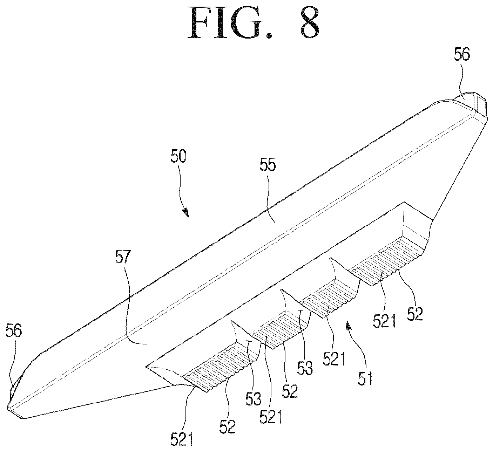

FIG. 5 is an exploded perspective view illustrating a lighting device 20 of a suction head 1 for a vacuum cleaner according to one or more embodiments of the disclosure. FIG. 6 is a cross-sectional view illustrating a lighting device 20 of a suction head 1 for a vacuum cleaner according to one or more embodiments of the disclosure. FIG. 7 is an enlarged partial cross-sectional view illustrating part A of the lighting device 20 of FIG. 6. FIG. 8 is a perspective view illustrating a light guide 50 of a suction head 1 for a vacuum cleaner according to one or more embodiments of the disclosure.

Referring to FIGS. 5 and 6, the lighting device 20 according to one or more embodiments of the disclosure may include the light guide 50 and the light source assembly 30.

The light guide 50 may be formed to guide light emitted from the light source assembly 30. The light guide 50 may be formed to guide light emitted from the light source assembly 30 to the front of the housing 10.

The light guide 50 may be disposed above the light source assembly 30. Accordingly, light emitted from the light source assembly 30 may be guided to the front of the housing 10 by the light guide 50.

The light guide 50 may be formed in a bent shape. The light guide 50 may include a light-input surface 51 and a light-output surface 55. The light-input surface 51 may be formed at one end of the light guide 50, and the light-output surface 55 may be formed at the other end of the light guide 50.

The light guide 50 may be disposed so that the light-input surface 51 faces the light source 33 of the light source assembly 30, and the light-output surface 55 is exposed through the front side of the housing 10. In other words, the light-output surface 55 of the light guide 50 may be exposed through the light window 181 of the housing 10. Therefore, the light-output surface 55 of the light guide 50 may be viewed from the front of the suction head 1.

Light emitted from the light source 33 may be incident on the light-input surface 51 of the light guide 50, move through the light guide 50, and then be emitted to the outside of the light guide 50 through the light-output surface 55.

A serration portion 52 may be formed on one surface of the light guide 50 facing the light source assembly 30. In detail, a plurality of serration portions 52 may be provided on the light-input surface 51 of the light guide 50 facing the plurality of light sources 33 of the light source assembly 30. Here, the serration portion 52 refers to a portion where a pattern capable of dispersing incident light is formed. For example, the serration portion 52 may be formed as a plurality of protrusions 521 capable of refracting incident light in various directions.

The plurality of serration portions 52 may be provided to correspond to the plurality of light sources 33. In other words, the plurality of serration portions 52 may be formed in the same number as the number of plurality of light sources 33. In this embodiment, because the light source assembly 30 is provided with four light sources 33, the light guide 50 may include four serration portions 52.

The plurality of serration portions 52 may be formed at a certain interval to correspond to the plurality of light sources 33. Accordingly, the serration portion 52 may be positioned on the upper side of each of the plurality of light sources 33.

The plurality of serration portions 52 may be formed so that light emitted from the light sources 33 corresponding to the plurality of serration portions 52 is incident. An arear of each of the plurality of serration portions 52 may be formed to be wider than an area of the light source 33. Therefore, all light emitted from the light source 33 may be incident on the serration portion 52.

The plurality of serration portions 52 may be formed with the same pattern. The serration portion 52 may be formed as a plurality of protrusions 521 protruding from a plane forming one end of the light guide 50. The plurality of protrusions 521 may be formed to be in contact with each other. In other words, the plurality of protrusions 521 may be formed so that the plane 511 of one end of the light guide 50 is not exposed between the plurality of protrusions 521.

The plurality of protrusions 521 may be formed in various shapes. For example, each of the plurality of protrusions 521 may be formed as a triangular prism. The plurality of triangular prisms 521 may be formed in parallel to each other on the serration portion 52. For example, as illustrated in FIG. 8, each of the plurality of triangular prisms 521 may be formed in the serration portion 52 such that one ends of the triangular prisms 521 face the front of the light guide 50, that is, the light-output surface 55, and the other ends of the triangular prisms 521 face the rear of the light guide 50.

As illustrated in FIG. 7, the plurality of triangular prisms 521 may be formed to contact each other. In other words, the plurality of triangular prisms 521 may be formed such that two adjacent triangular prisms 521 contact each other. In detail, the plurality of triangular prisms 521 may be formed so that the plane 511 of one end of the light guide 50 on which the serration portion 52 is formed is not exposed between two adjacent triangular prisms 521.

In this way, when the plurality of triangular prisms 521 are formed to be in contact with each other, all light emitted from the light source 33 may be incident on the light guide 50 through the plurality of triangular prisms 521, thereby improving the light dispersion effect. When the plane 511 of one end of the light guide 50 is exposed between the plurality of triangular prisms 521, some of the light emitted from the light source 33 may be directly incident on the plane 511 of one end of the light guide 50, thereby reducing the light dispersion effect.

The light guide 50 may include a plurality of grooves 53 formed between the plurality of serration portions 52. The plurality of grooves 53 may be formed so as not to face the light sources 33 between the plurality of serration portions 52. That is, the plurality of grooves 53 may be formed to face a plurality of regions existing between the plurality of light sources 33. In other words, the plurality of grooves 53 may be formed so that light emitted from each of the plurality of light sources 33 does not directly enter the grooves 53.

Each of the plurality of grooves 53 may be formed in a V shape. The two side surfaces 531 forming the V may reflect light. Therefore, light incident into the light guide 50 through the plurality of triangular prisms 521 may be reflected on one side surface 531 of the plurality of grooves 53 and move into the inside of the light guide 50. In other words, the plurality of grooves 53 may further disperse the light by additionally reflecting the light incident through the plurality of serration portions 52.

Therefore, the light emitted from each of the plurality of light sources 33 is dispersed by each of the plurality of serration portions 52 and incident into the interior of the light guide 50, and the incident light is reflected again by the plurality of grooves 53 and dispersed in various directions, so that the uniformity of the light emitted through the light-output surface 55 of the light guide 50 may be improved.

Here, when the uniformity of light is high, the user may recognize that the light emitted through the light-output surface 55 comes from a single light source 33. In other words, in the case that the uniformity of light is high, when multiple lights emitted from the plurality of light sources 33 are emitted through the light guide 50, the user may recognize that the light emitted from through the light-output surface 55 is emitted from one light source 33 without recognizing the plurality of light sources 33.

Referring to FIG. 8, the light guide 50 may be formed in a shape bent at approximately 90 degrees. The light guide 50 may include the light-input surface 51, the light-output surface 55, a lower surface 57, and an upper surface 58.

The light-input surface 51 may be formed at one end of the light guide 50. The light-input surface 51 may be formed so that light emitted from the light source 33 is incident thereon. The plurality of serration portions 52 may be formed on the light-input surface 51. Each of the plurality of serration portions 52 may be formed to disperse light incident from the light source 33.

The light-input surface 51 may be formed with a narrower area than the light-output surface 55. For example, the length of the light-input surface 51 may be shorter than the length of the light-output surface 55.

The light-output surface 55 may be formed at the other end of the light guide 50 and may be formed so that light incident on the light-input surface 51 is emitted therethrough. The light-output surface 55 may be formed with a wider area than the light-input surface 51. For example, the length of the light-output surface 55 may be longer than the length of the light-input surface 51.

The light-output surface 55 may be formed to be approximately perpendicular to the light-input surface 51. Accordingly, light emitted from the light source 33 disposed below the light-input surface 51 may be emitted to the front of the housing 10 through the light guide 50.

The light-output surface 55 may be formed as a diffuse reflection surface capable of diffusely reflecting light. In other words, the light-output surface 55 may be formed so that the light moving through the light guide 50 and emitted through the light-output surface 55 is diffusely reflected and emitted. When the light-output surface 55 is formed as a diffuse reflection surface, the uniformity of the light emitted through the light guide 50 may be further improved.

When the surface roughness of the light-output surface 55 is increased, the light-output surface 55 may be formed as a diffuse reflection surface. When the light-output surface 55 is processed into a mirror surface, the light emitted through the light-output surface 55 is not diffusely reflected, so the uniformity of the light may be reduced.

A pair of detents 56 may be provided at both ends of the light-output surface 55. The pair of detents 56 may be fixed by being caught on the edge of the light window 181 of the lighting cover 18 provided on the front side of the upper housing 12.

The lower surface 57 may be formed to connect the light-input surface 51 and the light-output surface 55. Therefore, the lower surface 57 may be formed as a curved surface connecting the light-input surface 51 and the light-output surface 55. The lower surface 57 may be formed as a diffuse reflection surface capable of diffusely reflecting incident light. By increasing the surface roughness of the lower surface 57, the lower surface 57 may be formed into a diffuse reflection surface.

When the lower surface 57 of the light guide 50 is formed as the diffuse reflection surface, the light passing through the light guide 50 may be more dispersed, so that the uniformity of the light emitted through the light-output surface 55 may be further improved.

The upper surface 58 may be formed to face the lower surface 57 and connect the light-input surface 51 and the light-output surface 55. The upper surface 58 may be formed as a curved surface corresponding to the lower surface 57. The upper surface 58 may be formed as a mirror surface.

The upper surface 58 and the lower surface 57 may be connected by two side surfaces. The two side surfaces may be formed to connect the light-input surface 51 and the light-output surface 55.

A pair of catches 59 may be provided on the two side surfaces. The pair of catches 59 may be formed to allow a pair of hooks 42 provided on a support 40 of the light source assembly 30 to be caught.

The light guide 50 may be formed of transparent plastic. The light guide 50 may be molded by injection molding transparent plastic. Transparent poly carbonate PC or transparent styrenic block complementor SBC may be used as the transparent plastic.

The light-output surface 55 and the lower surface 57 of the light guide 50 may be formed into a diffuse reflection surface through corrosion. For example, in the case that the light guide 50 is injected using a mold, when the light-output surface 55 and the lower surface 57 are etched, the light-output surface 55 and the lower surface 57 may be formed into a diffuse reflection surface.

The light source assembly 30 may be formed to emit light. Accordingly, the light source assembly 30 may include at least one light source 33. The at least one light source 33 may be implemented as a light emitting diode LED.

The light source assembly 30 may include a printed circuit board 31 on which the at least one light source 33 is disposed. The printed circuit board 31 may be formed in a rectangular shape so as to be inserted into the mounting portion 17 of the lower housing 11.

In the case of this embodiment, the plurality of light sources 33 may be disposed on the upper surface of the printed circuit board 31. LEDs may be used as the plurality of light sources 33. The plurality of light sources 33 may be disposed at regular intervals on the upper surface of the printed circuit board 31.

In the case of this embodiment, four LEDs 33 are disposed on the upper surface of the printed circuit board 31, but this is only an example. The number of LEDs, i.e., light sources 33, disposed on the printed circuit board 31 may be determined by the desired illuminance of the lighting device 20. For example, the light source 33 may include three or fewer or five or more light sources 33.

A connector 34 may be provided on the lower surface of the printed circuit board 31. A wire capable of supplying power to the light source 33 may be connected to the connector 34.

The light source assembly 30 may include the support 40 configured to support the light guide 50 and the printed circuit board 31.

The upper surface of the support 40 may be formed to support the light guide 50. A support wall 41 that supports the light guide 50 may be provided on the upper surface of the support 40. The support wall 41 may be formed in a shape corresponding to a lower portion of the upper surface 58 of the light guide 50. The support wall 41 may be disposed perpendicular to the upper surface of the support 40.

The support wall 41 may include the pair of hooks 42. The pair of hooks 42 may be formed to couple the light guide 50. The pair of hooks 42 of the support wall 41 may be provided at positions corresponding to the pair of catches 59 of the light guide 50. Therefore, by coupling the pair of hooks 42 and the pair of catches 59, the light guide 50 may be fixed to the support 40.

An opening 43 into which the lower portion of the light guide 50 is inserted may be formed on the upper surface of the support 40. The opening 43 may be formed to penetrate the support 40 in a vertical direction. The opening 43 may be formed in front of the support wall 41.

When the lower portion of the light guide 50 is inserted into the opening 43 of the support 40, the light guide 50 may be supported by the support 40. In other words, the upper portion of the lower surface 57 of the light guide 50 may contact the upper surface of the support 40, and the lower portion of the lower surface 57 of the light guide 50 may be supported by the opening 43 of the support 40.

The printed circuit board 31 may be disposed on the lower surface of the support 40. In other words, the support 40 may be located on the upper surface of the printed circuit board 31. A protruding portion 44 may be provided on the lower surface of the support 40. The protruding portion 44 may extend downward along the edge of the opening 43. In other words, the protruding portion 44 may protrude from the lower surface of the support 40 to a certain height. The protruding portion 44 may be formed integrally with the support wall 41 adjacent to the opening 43.

The distance between the light-input surface 51 of the light guide 50 and the light source 33 disposed on the printed circuit board 31 may be defined by the protruding portion 44. The height of the protruding portion 44 may be determined so that the plurality of serration portions 52 of the light guide 50 do not come into contact with the upper surfaces of the plurality of light sources 33 of the printed circuit board 31.

A fixing protrusion 45 may be provided on the lower surface of the support 40. A through hole 35 may be formed in the printed circuit board 31 at a position corresponding to the fixing protrusion 45 of the support 40. Therefore, when the fixing protrusion 45 of the support 40 is inserted into the through hole 35 of the printed circuit board 31 and then inserted into the fixing hole 173 of the mounting portion 17 of the lower housing 11, the support 40 and the printed circuit board 31 may be fixed to the mounting portion 17.

When power is supplied to the plurality of light sources 33, light may be emitted upward from the plurality of light sources 33. The light emitted from the plurality of light sources 33 may be incident on the light-input surface 51 of the light guide 50 disposed above the plurality of light sources 33.

The light incident on the light-input surface 51 of the light guide 50 may move through the inside of the light guide 50, and may be emitted to the outside of the light guide 50 through the light-output surface 55. At this time, because the light-output surface 55 of the light guide 50 is exposed at the front side of the housing 10, the light emitted from the light-output surface 55 may illuminate the front of the housing 10.

At this time, because the light-output surface 55 is formed as a diffuse reflection surface, the light emitted through the light-output surface 55 may be diffusely reflected and dispersed.

The suction head 1 for a vacuum cleaner according to one or more embodiments of the disclosure has the serration portions 52 formed on the light-input surface 51 of the light guide 50, so that the light emitted from the plurality of light sources 33 may be refracted in various directions and dispersed by the serration portions 52. In addition, because the plurality of V-shaped grooves 53 are formed between the plurality of serration portions 52 on the light-input surface 51 of the light guide 50, the light incident through the plurality of serration portions 52 is additionally reflected by the plurality of V-shaped grooves 53, so that the uniformity of light emitted through the light-output surface 55 of the light guide 50 may be improved.

Therefore, when the suction head 1 for a vacuum cleaner according to one or more embodiments of the disclosure uses the plurality of light sources 33 as the lighting device 20, the user may not recognize the plurality of light sources 33 through the light-output surface 55 of the light guide 50. Accordingly, the aesthetics of the lighting of the suction head 1 for a vacuum cleaner according to one or more embodiments of the disclosure may be improved.

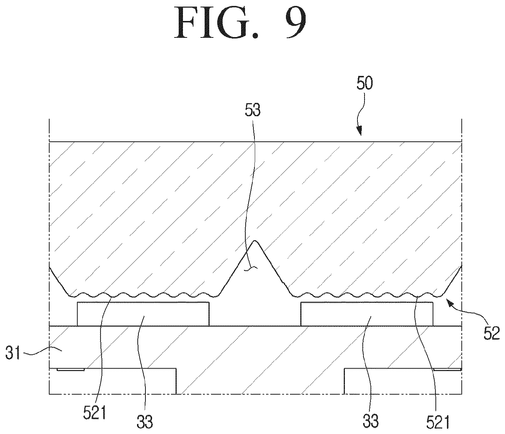

In the above embodiments, each of the plurality of serration portions 52 of the light guide 50 is formed as a plurality of triangular prisms 521. However, the disclosure is not limited thereto. When forming the plurality of serration portions 52 as the plurality of triangular prisms 521, the vertices of the triangular prisms 521 may be formed as round for ease of manufacturing. The serration portions 52 according to such an example are illustrated in FIG. 9.

FIG. 9 is a partial cross-sectional view illustrating a light guide 50 of a suction head 1 for a vacuum cleaner according to one or more embodiments of the disclosure.

Referring to FIG. 9, the serration portion 52 may be formed in a wave shape, and the valleys and peaks thereof may be formed in a round shape. In other words, the serration portion 52 may be formed in a sine wave shape. As an example, the round portions of the valleys and peaks may be formed to have a radius of curvature of 0.2 mm to 0.3 mm.

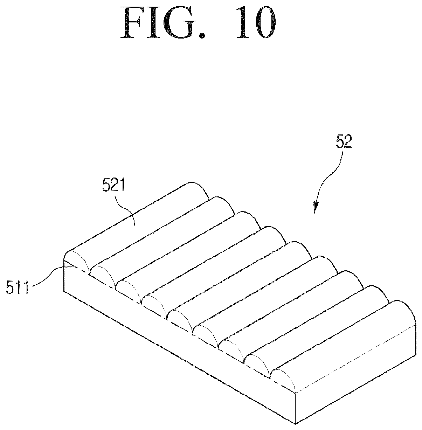

As another example, as illustrated in FIG. 10, the plurality of protrusions 521 of the serration portion 52 may be formed in a plurality of semi-cylindrical shapes.

FIG. 10 is a perspective view illustrating a serration portion 52 of a light guide 50 of a suction head 1 for a vacuum cleaner according to one or more embodiments of the disclosure.

Referring to FIG. 10, the plurality of protrusions 521 forming the serration portion 52 may be formed in a plurality of semi-cylindrical shapes. At this time, the plurality of semi-cylinders 521 may be arranged to be in contact with each other on an imaginary plane 511. In detail, the plurality of semi-cylinders 521 may be arranged so that two adjacent semi-cylinders 521 are in contact with each other. In other words, the plurality of semi-cylinders 521 may be arranged so that the imaginary plane 511 is not exposed between two adjacent semi-cylinders 521.

Then, light emitted from the light source 33 may be incident into the interior of the light guide 50 through the plurality of semi-cylinders 521.

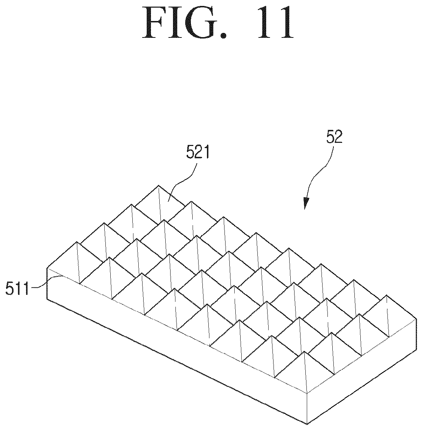

As another example, as illustrated in FIG. 11, the plurality of protrusions 521 of the serration portion 52 may be formed in a plurality of square pyramids.

FIG. 11 is a perspective view illustrating a serration portion 52 of a light guide 50 of a suction head 1 for a vacuum cleaner according to one or more embodiments of the disclosure.

Referring to FIG. 11, the plurality of protrusions 521 forming the serration portion 52 may be formed in a plurality of square pyramids. At this time, the plurality of square pyramids 521 may be arranged to be in contact with each other on an imaginary plane 511. The plurality of square pyramids 521 may be formed on the entire imaginary plane 511 forming the serration portion 52. At this time, the plurality of square pyramids 521 may be arranged on the imaginary plane 511 so that their bottom surfaces are in contact with each other. Accordingly, the imaginary plane 511 is not exposed between two adjacent square pyramids 521.

Then, light emitted from the light source 33 may be incident into the interior of the light guide 50 through the plurality of square pyramids 521.

In FIG. 11, the case where the plurality of protrusions 521 forming the serration portion 52 are formed as square pyramids 521 is described, but the shape of the plurality of protrusions 521 is not limited thereto. The plurality of protrusions 521 may be formed as cones or various regular polygonal pyramids such as regular triangular pyramids, regular pentagonal pyramids, and like.

In other words, the serration portion 52 may be formed in various shapes as long as it can refract and diffuse the incident light.

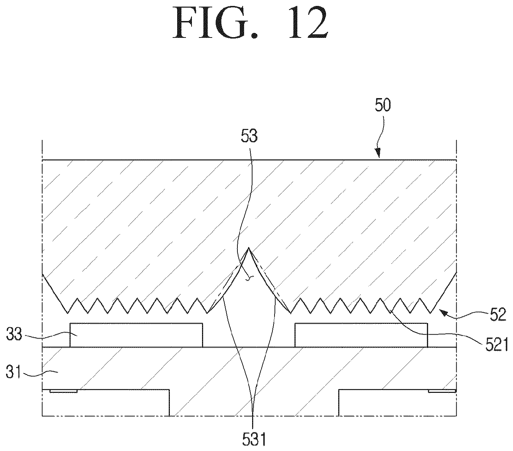

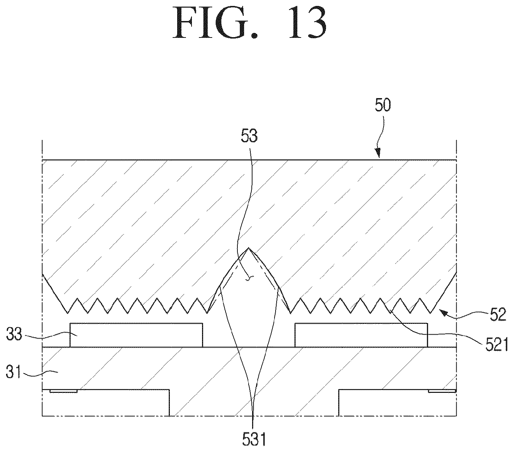

In the above embodiment, the plurality of grooves 53 formed between the plurality of serration portions 52 of the light guide 50 are formed in a V shape, and both side surfaces 531 of each of the grooves 53 are formed as flat surfaces. However, the shape of the plurality of grooves 53 of the light guide 50 according to the disclosure is not limited thereto. As another example, both side surfaces of each of the plurality of grooves 53 may be formed as curved surfaces. This will be described with reference to FIGS. 12 and 13.

FIG. 12 is a partial cross-sectional view illustrating a light guide 50 of a suction head 1 for a vacuum cleaner according to one or more embodiments of the disclosure.

Referring to FIG. 12, the groove 53 formed between the plurality of serration portions 52 may be formed in an approximately V shape.

At this time, both side surfaces 531 of the groove 53 may be formed as curved surfaces rather than flat surfaces. The side surfaces 531 may be formed as convex surfaces protruding toward the center of the groove 53.

Then, the light incident on the plurality of triangular prisms 521 of the serration portion 52 may be reflected by the convex surfaces 531 and thus may move into the interior of the light guide 50.

FIG. 13 is a partial cross-sectional view illustrating a light guide 50 of a suction head 1 for a vacuum cleaner according to one or more embodiments of the disclosure.

Referring to FIG. 13, the groove 53 formed between the plurality of serration portions 52 may be formed in an approximately V shape.

At this time, both side surfaces 531 of the groove 53 may be formed as curved surfaces rather than flat surfaces. The side surfaces 531 may be formed as curved surfaces protruding toward the interior of the light guide 50. In other words, both side surfaces 531 of the groove 53 may be formed as concave curved surfaces toward the center of the groove 53.

Then, the light incident on the plurality of triangular prisms 521 of the serration portion 52 may be reflected by the concave curved surfaces 531 and thus may move into the interior of the light guide 50.

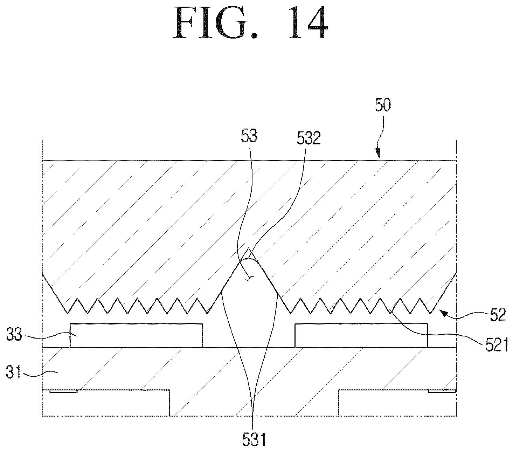

As another example, when the plurality of grooves 53 formed between the plurality of serration portions 52 of the light guide 50 are formed in a V shape, the bottom 532 of the V-shaped groove 53 may be formed as a round shape as illustrated in FIG. 14.

FIG. 14 is a partial cross-sectional view illustrating a light guide 50 of a suction head 1 for a vacuum cleaner according to one or more embodiments of the disclosure.

Referring to FIG. 14, the bottom 532 where the two side surfaces 531 of the V-shaped groove 53 meet may be formed to be round. In this way, when the bottom 532 of the V-shaped groove 53 is formed to be round, it may be easy to manufacture the light guide 50 by injection molding.

A test was conducted to confirm the effect of the light guide 50 used in the suction head 1 for a vacuum cleaner according to one or more embodiments of the disclosure. In detail, the brightness of light emitted from the light-output surface 55 of the light guide 50 according to one or more embodiments of the disclosure was compared with the brightness of light emitted from the light-output surface 55 of a comparative light guide 50' without the plurality of serration portions 52 and the plurality of grooves 53.

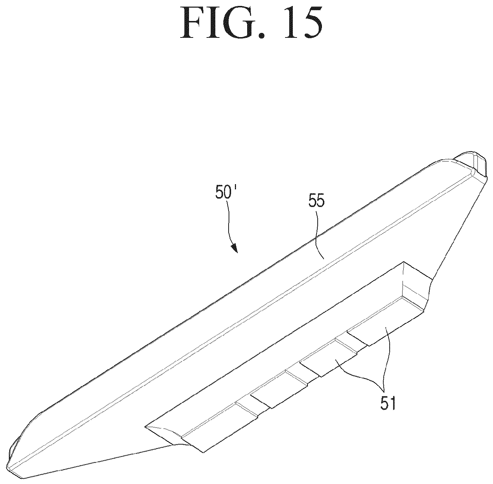

The comparative light guide 50' subjected to a brightness comparison test with the light guide 50 according to one or more embodiments of the disclosure is illustrated in FIG. 15.

FIG. 15 is a perspective view illustrating a comparison light guide 50' compared to a light guide 50 of a suction head 1 for a vacuum cleaner according to one or more embodiments of the disclosure.

Referring to FIG. 15, the comparison light guide 50' has the same shape as the light guide 50 used in the suction head 1 for a vacuum cleaner according to one or more embodiments of the disclosure, but does not have the plurality of serration portions 52 and the plurality of grooves 53 provided on the light-input surface 51.

The light-input surface 51 of the comparison light guide 50' may be formed as a plurality of flat plates. There is no groove 53 between the plurality of flat plates. Light emitted from the plurality of light sources 33 may be incident on the plurality of flat plates.

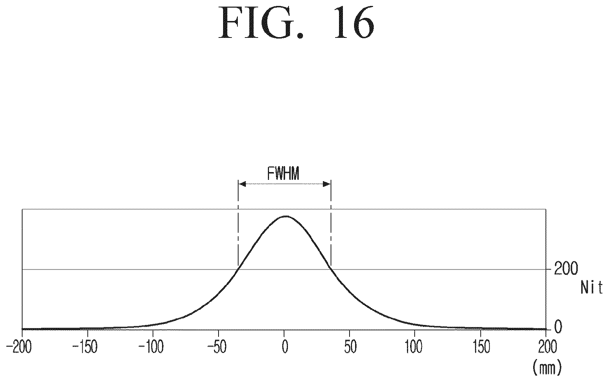

Hereinafter, with reference to FIGS. 16 to 19, the results of comparing the brightness of light emitted from the light guide 50 according to one or more embodiments of the disclosure with the brightness of light emitted from the comparison light guide 50' will be described in detail.

First, the results of measuring the brightness of the bottom surface when light emitted from the light-output surface 55 of the light guide 50 illuminates the bottom surface in front of the suction head 1 will be described.

The brightness was measured using a brightness meter. CA-2000 (KONICA MINOLTA) was used as the meter.

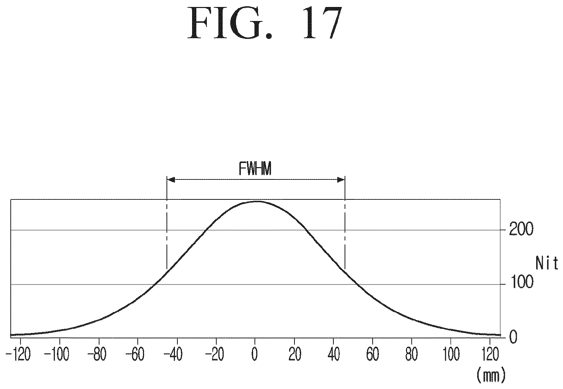

FIG. 16 is a graph illustrating the brightness distribution of a bottom surface of a suction head 1 for a vacuum cleaner using the comparison light guide 50' of FIG. 15. FIG. 17 is a graph illustrating the brightness distribution of a bottom surface of a suction head 1 for a vacuum cleaner according to one or more embodiments of the disclosure.

For reference, in FIGS. 16 and 17, the horizontal axis represents the width of the area illuminated by the lighting device 20 on the bottom surface, and the unit is mm. 0 represents the center of the lighting device 20, that is, the center of bottom surface corresponding to the center of the light-output surface 55 of the light guide 50. The vertical axis represents the brightness, and the unit is nit.

Referring to FIG. 16, in the suction head of the vacuum cleaner including the comparison light guide 50' without the serration portion and the V-shaped groove, the brightness of the bottom surface is normally distributed, and the brightness of the portion of the bottom surface corresponding to the center of the light-output surface 55 of the comparison light guide 50' is the highest. The brightness of the central portion is approximately 378.7 nit. In addition, the full width at half maximum FWHM of the brightness is approximately 77.5 mm.

Referring to FIG. 17, in the suction head 1 for the vacuum cleaner according to one or more embodiments of the disclosure including a light guide 50 having the serration portion 52 and the V-shaped groove 53, the brightness of the bottom surface is normally distributed, and the brightness of the portion of the bottom surface corresponding to the center of the light-output surface 55 of the light guide 50 is the highest. The brightness of the central portion is approximately 254.1 nits. In addition, the FWHM of the brightness is approximately 87.5 mm.

Comparing the results of FIG. 16 and FIG. 17, the comparison light guide 50' has a higher brightness at the center and a smaller FWHM than the light guide 50 according to this disclosure. Therefore, it can be seen that the light passing through the light guide 50 according to this disclosure has improved diffusivity than the light passing through the comparison light guide 50'.

Next, in order to confirm the uniformity of light emitted from the lighting device 20, the brightness of the light-output surface 55 was measured when light was emitted from the light-output surface 55 of the light guide 50 and 50'.

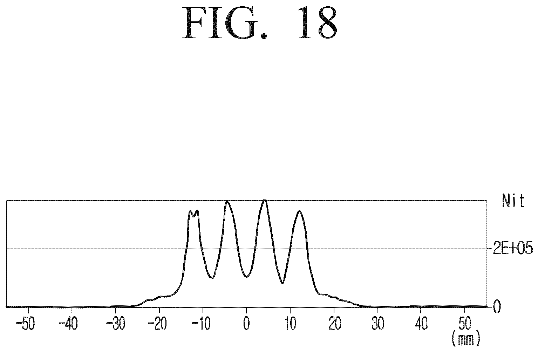

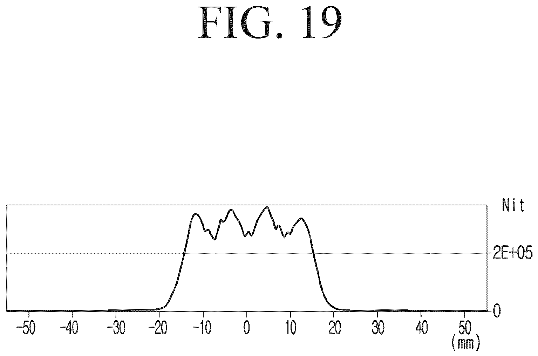

FIG. 18 is a graph illustrating the brightness distribution of a light-output surface 55 of the comparison light guide 50' of a suction head for a vacuum cleaner using the comparison light guide 50' of FIG. 15. FIG. 19 is a graph illustrating the brightness distribution of a light-output surface 55 of a light guide 50 of a suction head 1 for a vacuum cleaner according to one or more embodiments of the disclosure.

For reference, in FIGS. 18 and 19, the horizontal axis represents the length of the light-output surface 55 of the light guide 50 and 50', and the unit is mm. 0 represents the center of the light-output surface 55, that is, the center of the light-output surface 55 of the light guide 50 and 50'. The vertical axis represents the brightness, and the unit is nit.

Referring to FIG. 18, in the suction head for the vacuum cleaner including the comparison light guide 50' without the serration portion and the V-shaped groove, there are four points with high brightness and three points with low brightness on the light-output surface 55 of the comparison light guide 50'. The three points with low brightness are located between the four points with high brightness.

In the case of the comparison light guide 50', the maximum brightness is 367,270 nits, and the difference in brightness between the high brightness points and the low brightness points is large. At this time, the brightness uniformity in the ±10 mm region measured by the brightness meter is 24.6%. Here, the brightness uniformity in the ±10 mm region refers to the brightness uniformity in the region of -10 mm to +10 mm from the center of the light-output surface 55 of the comparison light guide 50'.

Referring to FIG. 19, in the suction head 1 for the vacuum cleaner according to one or more embodiments of the disclosure including a light guide 50 having the serration portion 52 and the V-shaped groove 53, there are four points with high brightness and three points with low brightness on the light-output surface 55 of the light guide 50. The three points with low brightness are located between the four points with high brightness.

In the case of the light guide 50 according to this disclosure, the maximum brightness is 352,852 nits, and the difference in brightness between the high brightness points and the low brightness points is smaller than that of the comparison light guide 50'. At this time, the brightness uniformity in the ±10 mm region measured by the brightness meter is 69.6%. Here, the brightness uniformity in the ±10 mm region refers to the brightness uniformity in the region of -10 mm to +10 mm from the center of the light-output surface 55 of the light guide 50.

Comparing the results of FIG. 18 and FIG. 19, the comparison light guide 50' has a similar maximum brightness to that of the light guide 50 of this disclosure, but the brightness uniformity in the ±10 mm region is very lower than that of the light guide 50 of this disclosure. In other words, the brightness uniformity in the ±10 mm region of the light guide 50 according to one or more embodiments of the disclosure may be about 2.83 times higher than that of the comparison light guide 50'. Therefore, the uniformity of the light passing through the light guide 50 according to this disclosure may be improved compared to that of the light passing through the comparison light guide 50'.

The suction head 1 for a vacuum cleaner according to one or more embodiments of the disclosure using the light guide 50 having the structure described above may improve the diffusion and uniformity of light when illuminating the front with the lighting device 20.

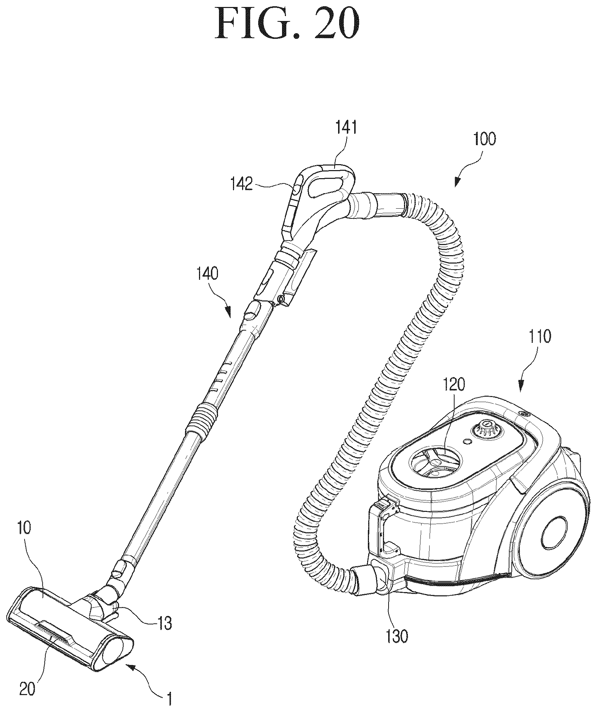

Hereinafter, the vacuum cleaner 100 equipped with the suction head 1 for a vacuum cleaner according to one or more embodiments of the disclosure described above will be described with reference to FIG. 20.

FIG. 20 is a perspective view illustrating a vacuum cleaner 100 according to one or more embodiments of the disclosure.

Referring to FIG. 20, the vacuum cleaner 100 may include a main body 110 and a suction head 1.

The main body 110 may include a dust collecting device 120 capable of separating and storing dust from sucked air. The dust collecting device 120 may include a suction force generating device configured to generate a suction force capable of sucking air and dust.

The suction head 1 may be configured to suck up dust from the surface to be cleaned. Because the suction head 1 has been described above, a detailed description thereof is omitted.

The vacuum cleaner 100 may include an extension pipe 140 connecting the main body 110 and the suction head 1. One end of the extension pipe 140 may be connected to the connecting pipe 13 of the suction head 1, and the other end thereof may be connected to the inlet 130 of the main body 110.

The extension pipe 140 may include a handle 141. The handle 141 may include an operating unit 142 configured to operate the vacuum cleaner 100. The operating unit 142 may include a switch that may control the dust collecting device 120 and a light switch that may turn the lighting device 20 on/off.

When the light switch is turned on, the lighting device 20 of the suction head 1 is turned on to illuminate the front of the suction head 1. At this time, the light emitted by the lighting device 20 of the suction head 1 according to one or more embodiments of the disclosure may have high diffusion and uniformity.

Therefore, by using the vacuum cleaner 100 according to one or more embodiments of the disclosure, the user may easily clean a dark surface to be cleaned and feel an improved aesthetic.

In the foregoing, the disclosure has been shown and described with reference to various embodiments. However, it is understood by those skilled in the art that various changes may be made in form and detail without departing from the scope of the disclosure as defined by the appended claims and equivalents thereof.

## Claims

1. A suction head for a vacuum cleaner comprising:
a housing 10 including a suction port;
a light source assembly 30, to be disposed inside the housing 10, configured to emit light; and
a light guide 50, to be disposed toward a front side of the housing 10, configured to guide light emitted from the light source assembly 30 to be emitted toward the front side of the housing 10,
wherein a serration portion 52 is formed on one surface of the light guide 50 facing the light source assembly 30.

2. The suction head for the vacuum cleaner of claim 1, wherein
the light source assembly 30 comprises:
a printed circuit board 31; and
a plurality of light sources 33 disposed on the printed circuit board 31.

3. The suction head for the vacuum cleaner of claim 2, wherein
the light guide 50 comprises a plurality of serration portions 52 corresponding to the plurality of light sources 33.

4. The suction head for the vacuum cleaner of claim 3, wherein
the light guide 50 comprises a plurality of grooves 53 formed between the plurality of serration portions 52.

5. The suction head for the vacuum cleaner of claim 4, wherein
the plurality of grooves 53 are formed in a V shape.

6. The suction head for the vacuum cleaner of claim 1, wherein
the serration portions 52 are formed in a plurality of protrusions 521 protruding from the one surface of the light guide 50.

7. The suction head for the vacuum cleaner of claim 6, wherein
the plurality of protrusions 521 are formed as a plurality of triangular prisms.

8. The suction head for the vacuum cleaner of claim 7, wherein
the plurality of triangular prisms are formed so that two adjacent triangular prisms are in contact with each other.

9. The suction head for the vacuum cleaner of claim 1, wherein
the light guide 50 comprises:
a light-input surface 51 on which the light emitted from the light source assembly 30 is incident and the serration portion 52 is formed;
a light-output surface 55 from which the light incident on the light-input surface 51 is emitted;
a lower surface connecting the light-input surface 51 and the light-output surface 55; and
an upper surface facing the lower surface and connecting the light-input surface 51 and the light-output surface 55,
wherein the light-output surface 55 is formed as a diffuse reflection surface enabled to diffuse and to reflect the emitted light.

10. The suction head for the vacuum cleaner of claim 9, wherein
the light guide 50 is formed such that the light-input surface 51 and the light-output surface 55 form a right angle.

11. The suction head for the vacuum cleaner of claim 9, wherein
the lower surface of the light guide 50 is formed as the diffuse reflection surface enabled to diffuse and to reflect incident light.

12. A suction head for a vacuum cleaner comprising:
a housing 10 including a suction port;
a light source assembly 30, to be disposed inside the housing 10, including a plurality of light sources 33 configured to emit light; and
a light guide 50, to be disposed toward a front side of the housing 10, configured to guide light emitted from the light source assembly 30 to be emitted toward the front side of the housing 10,
wherein the light guide 50 comprises:
a plurality of serration portions 52 formed on a light-input surface 51 facing the plurality of light sources 33 of the light source assembly 30; and
a plurality of V-shaped grooves 53 formed between the plurality of serration portions 52.

13. The suction head for the vacuum cleaner of claim 12, wherein
the plurality of serration portions 52 include a plurality of triangular prisms.

14. The suction head for the vacuum cleaner of claim 12, wherein
the light guide 50 includes a light-output surface 55 through which light is emitted, and the light-output surface 55 is formed as a diffuse reflection surface enabled to diffuse and to reflect the emitted light.

15. A vacuum cleaner comprising:
a suction head according to any one of claims 1 to 14, and
a dust collecting device 120, to be connected to the suction head, configured to collect dust sucked through the suction head.
